(19) **Europäisches Patentamt / European Patent Office / Office européen des brevets**

(11) **EP 4 645 466 A1**

(12) **EUROPEAN PATENT APPLICATION**
published in accordance with Art. 153(4) EPC

(43) Date of publication:
**05.11.2025 Bulletin 2025/45**

(21) Application number: **23911481.2**

(22) Date of filing: **24.11.2023**

(51) International Patent Classification (IPC):
**H01M 4/38** (2006.01)    **C01B 32/05** (2017.01)
**C01B 33/029** (2006.01)    **H01M 4/36** (2006.01)

(52) Cooperative Patent Classification (CPC):
**C01B 32/05; C01B 33/029; H01M 4/36; H01M 4/38;**
**Y02E 60/10**

(86) International application number:
**PCT/JP2023/042241**

(87) International publication number:
**WO 2024/142699 (04.07.2024 Gazette 2024/27)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **28.12.2022 JP 2022212751**

(71) Applicant: **Group14 Technologies, Inc.**
**Woodinville, WA 98072 (US)**

(72) Inventors:
• **ITO Yuji**
**Tokyo 105-7325 (JP)**
• **FUJITA Masato**
**Tokyo 105-7325 (JP)**
• **TONEGAWA Akihisa**
**Tokyo 105-7325 (JP)**
• **INOUE Hirofumi**
**Tokyo 105-7325 (JP)**

(74) Representative: **Ostertag & Partner Patentanwälte**
**mbB**
**Azenbergstraße 35**
**70174 Stuttgart (DE)**

(54) **COMPOSITE PARTICLES, METHOD FOR PRODUCING SAME AND USE OF SAME**

(57)    The present invention provides a composite particle, which includes a carbon material and silicon, wherein electrical resistivity is reduced. The present invention includes a composite particle including a carbon material and silicon, wherein a He true density by dry density measurement using helium gas is 1.85 g/cm$^3$ or more and 2.10 g/cm$^3$ or less, a silicon content is 30 mass% or more and 80 mass% or less, an oxygen content is 4.0 mass% or less, and a BET specific surface area is 0.5 m$^2$/g or more and 30.0 m$^2$/g or less.

**EP 4 645 466 A1**

## Description

**Technical** Field

The present invention relates to composite particles, as well as the method for producing and application of such.

Background Art

Lithium-ion rechargeable batteries used in IT devices such as smartphones and tablet PCs, vacuum cleaners, power tools, electric bicycles, drones, automobiles, and the like require negative electrode active materials that combine high capacity and high output. Silicon (theoretical specific capacity: 4,200 mAh/g) having a higher theoretical specific capacity than currently used graphite (theoretical specific capacity: 372 mAh/g) has attracted attention as a negative electrode active material.

However, silicon (Si) expands and contracts in response to electrochemical lithium insertion and desorption, and the volume at the time of expansion is up to approximately 3 to 4 times the volume at the time of contraction. As a result, silicon particles self-destruct and detach from the electrode, and thus lithium-ion rechargeable batteries using silicon are known to have remarkably low cycle characteristics. Therefore, extensive research is currently underway on not only use of silicon as a replacement for graphite, but also on use as a negative electrode active material with reduced structural expansion and contraction as a whole. Among this research, many attempts have been made to form composites with carbonaceous materials.

As an example of a negative electrode having a high capacity and long life, patent document 1 discloses a silicon-carbon composite obtained by a method for producing silicon in the pores of a porous carbon material by bringing a porous carbon material and silane gas into contact at a high temperature. The porous carbon material taught in patent document 1 has pores of 5 to 1,000 nm and is reacted with silane gas to fill the pores with silicon.

Prior Art Literature

Patent Documents

Patent Document 1: JP 2018-534720 A (Translation of PCT Application)

Summary of Invention

Problem to Be Solved by Invention

In the porous carbon material described in Patent Document 1, there is a problem wherein the pore diameter is small and an excessive amount of silicon precipitates on the surface of the composite material during silicon filling, resulting in high electrical resistivity. When electrical resistivity is high, the coulombic efficiency of the lithium-ion secondary battery may decrease, leading to reduced cycle characteristics.

Therefore, an object of the present invention is to provide a composite particle, which includes a carbon material and silicon, having reduced electrical resistivity.

**Means for Solving Problem**

The present invention has, for example, the following aspects.

[1] A composite particle including

a carbon material and silicon, wherein a He true density by dry density measurement using helium gas is 1.85 $g/cm^3$ or more and 2.10 $g/cm^3$ or less,
a silicon content of 30 mass% or more and 80 mass% or less,
and an oxygen content of 4.0 mass% or less.

[2] The composite particle according to [1], wherein a BA true density, which is a true density by wet density measurement using 1-butanol, is 1.55 $g/cm^3$ or more and 1.90 $g/cm^3$ or less,
and the He true density is greater than the BA true density.
[3] The composite particles according to [1] or [2], wherein, in a Raman spectrum, a peak is present in at 450 $cm^{-1}$ or more and 495 $cm^{-1}$ or less.

[4] The composite particles according to [3], wherein, in a Raman spectrum, when an intensity of the peak is denoted $I_{Si}$ and an intensity of a G band (peak intensity close to 1,580 cm$^{-1}$) is denoted $I_G$, $I_{Si}/I_G$ is 1.3 or less.

[5] The composite particles according to [4], wherein, in a Raman spectrum, when an intensity of a D band (peak intensity close to 1,350 cm$^{-1}$) is $I_D$, $I_D/I_G$ is 0.2 or more and 1.4 or less.

[6] The composite particles according to any of [1] to [5], wherein the carbon material is porous carbon, and silicon is present in the pores of the porous carbon.

[7] The composite particles according to any of [1] to [6], wherein (peak intensity of SiC (111) surface)/(peak intensity of Si (111) surface) is 0.01 or less in an XRD pattern by powder XRD using Cu-K$\alpha$ radiation.

[8] The composite particles according to any of [1] to [7], wherein a 50% particle diameter $D_{V50}$ in a cumulative particle size distribution on a volumetric basis is 1.0 $\mu$m or more and 40.0 $\mu$m or less, and a 90% particle diameter $D_{V90}$ is 50.0 $\mu$m or less.

[9] The composite particles according to any of [1] to [8], wherein a BET specific surface area is 0.5 m$^2$/g or more and 30.0 m$^2$/g or less.

[10] The composite particles according to any of [1] to [9], wherein, when atomic number ratios according to a narrow spectrum of Si, O, and C in X-ray photoelectron spectroscopy are denoted $A_{Si}$, $A_O$, and $A_C$, respectively, and ratios of SiO$_2$ and SiO from among Si type ratios according to Si 2p spectral state analysis are $B_{SiO2}$ and $B_{SiO}$, respectively, $A_{Si}$ is 0.05 or more, and $A_C/(A_c + A_{Si} \times (B_{SiO2} + B_{SiO}))$ is 0.55 or more.

[11] A method for producing composite particles, having a step (A) for bringing a gas including a silicon-including-gas at an amount satisfying the following condition (2) into contact with a porous carbon satisfying the following condition (1) at 300°C or more and 500°C or less to precipitate silicon in the pores and on the surface of the porous carbon.

Condition (1): In a nitrogen gas adsorption test, a pore volume when a relative pressure P/P$_0$ is 0.01 is denoted $V_{0.01}$, and a pore volume when the relative pressure P/P$_0$ is 0.99 is denoted $V_{0.99}$, where $V_{0.99}$ is between 0.4 cm$^3$/g and 1.5 cm$^3$/g, $V_{0.01}/V_{0.99}$ is 0.4 or more, and a true density by dry density measurement using helium gas is between 1.90 g/cm$^3$ and 2.30 g/cm$^3$.

Condition (2): The volume of silicon when all silicon-including gas is converted to silicon is 1.4 times the $V_{0.99}$ of the porous carbon, or less.

[12] The method for producing composite particles according to [11], further having a step (B) for bringing a gas including a hydrocarbon having an unsaturated bond into contact with the particles obtained in the step (A) at 500°C or lower.

[13] The method for producing composite particles according to [11] or [12], further having a step (C) for oxidizing the particles obtained in the step (A).

[14] The method for producing composite particles according to [12], further having a step (C) for oxidizing the particles obtained in the step (B).

[15] The method for producing composite particles according to any of [11] to [14], wherein the composite particles according to any of [1] to [10] are produced.

[16] A negative electrode active material including the composite particles according to any of [1] to [10].

[17] A negative electrode mixture layer including the negative electrode active material according to [16].

[18] A lithium ion rechargeable battery including the negative electrode mixture layer according to [17].

## Effect of Invention

According to the present invention, it is possible to reduce the electrical resistivity of composite particles including a carbon material and silicon.

## Embodiments of Invention

Next, the present invention will be described in detail. Unless otherwise specified, a "lithium-ion rechargeable battery" may be referred to simply as a "battery."

[1] Composite particles

The composite particles according to the present invention are composite particles including a carbon material and silicon.

The composite particles may have a layer including carbon on the surface (hereinafter also referred to as a "coat layer including carbon" or "coat layer"). That is, the composite particles may be particulate matter (hereinafter also referred to as "coated composite particles") having a coat layer including carbon on the surface and having a particulate matter including a carbon material and silicon on the inside of the coat layer. The particulate matter including a carbon material and silicon is also referred to as a "Si/C particle.

In the present invention, the Si/C particles and the coated composite particles may be referred to collectively as "composite particles" without distinction.

The "composite particles including a carbon material and silicon" are particulate matter including silicon (Si) on the surface and inside of the carbon material. The carbon material is preferably porous carbon, and the silicon is preferably included in at least the pores of the porous carbon. "Porous carbon" is a carbon material having pores. A porous carbon made using known techniques may be used.

In the composite particles, it is preferable that a fine Si domain be formed uniformly inside the carbon material. "Si domain" refers to a region where silicon is present. Due to the composite particles having this structure, expansion and contraction associated with charging and discharging occurs isotropically, and thus charge and discharge cycle durability is improved. This structure may be determined by performing cross-sectional SEM-EDS observation of the composite particles using a scanning electron microscope (Scanning Electron Microscope: SEM) and an energy dispersive X-ray spectroscope (Energy Dispersive X-ray Spectroscopy: EDS). When, inside the composite particles, distributions of silicon and carbon overlap, a fine Si domain at or below the spatial resolution of the SEM-EDS is understood to be dispersed uniformly.

The composite particles may be obtained by bringing a silicon source such as silane ($SiH_4$), for example, into contact with the particulate porous carbon to precipitate silicon (usually amorphous) in the pores within the porous carbon and optionally forming a further coat layer. At this time, by using porous carbon having fine pores, a fine Si domain may be formed uniformly within the particles.

The silicon content of the composite particles is 30 mass% or more. Here, the "silicon content" of the composite particles refers to the content of silicon elements as silicon in the silicon metal and compounds included in the composite particles.

When the silicon content is 30 mass% or more, the amount of silicon in the composite particles is sufficient, and the discharge capacity increases. From the same perspective, the silicon content is more preferably 35 mass% or more, and even more preferably 40 mass% or more. On the other hand, if the silicon content is excessively low at less than 30 mass%, the amount of silicon in the composite particles is insufficient, and the discharge capacity is low.

The silicon content of the composite particles is 80 mass% or less. When the silicon content is 80 mass% or less, the amount of silicon inside the composite particles is not excessive, allowing carbon to absorb the volume changes due to expansion and contraction. From the same perspective, the silicon content is more preferably 75 mass% or less, and even more preferably 70 mass% or less. On the other hand, if the silicon content is excessively high at more than 80 mass%, the amount of silicon in the composite particles is excessive, preventing carbon from absorbing the volume changes due to expansion and contraction.

The silicon content in the composite particles can be quantified by conventional known analytical methods. For example, the silicon content in the composite particles can be quantified by performing fluorescent X-ray analysis measurements as well as analysis which utilizes methods such as the fundamental parameter method (FP method). Additionally, by burning the composite particles to remove carbon, and completely dissolving the ash in acid or alkali, the silicon content in the composite particles may also be quantified using inductively coupled plasma optical emission spectrometry (ICP-AES).

The oxygen content of the composite particles is 4.0 mass% or less. When an oxygen content exceeds 4.0 mass%, it means that when the composite particles are used as the active material for the negative electrode of a lithium-ion rechargeable battery, the irreversible capacity of the negative electrode is large. From the perspective of the irreversible capacity of the negative electrode and the electrical resistivity of the composite particles, the oxygen content is more preferably 2.0 mass% or less, even more preferably 1.5 mass% or less, particularly preferably 1.0 mass% or less, and most preferably 0.7 mass% or less. The lower limit of the oxygen content is preferably 0.2 mass%.

The oxygen content in the composite particles can be measured, for example, by an oxygen-nitrogen simultaneous measurement device.

In the present invention, unless otherwise specified, the oxygen content of the composite particles refers to the oxygen content of those stored within two days after production or in a non-oxidizing atmosphere. When measurement within two days following production is not possible due to step circumstances, for example, storage in an inert atmosphere such as argon may be carried out for measurement at a later date, and the value may be considered equivalent to that measured within two days following production. This is because if stored in an inert atmosphere, oxidation does not progress.

The oxygen content can be maintained within the above range, for example, by storing the composite particles in an inert atmosphere.

The He true density, which is the true density calculated by dry density measurement using helium gas, of the composite particles is 1.85 $g/cm^3$ or more.

The He true density being 1.85 $g/cm^3$ or more indicates that the pores of the carbon material in the composite particles are sufficiently filled with silicon, that the coat layer is thin, or the like. When the He true density is 1.85 g/cm$^3$ or more, a specific capacity of the composite particles may be increased, and a electrical resistivity may be lowered.

On the other hand, when the He true density is less than 1.85 g/cm$^3$, it means that the amount of silicon filling the pores of the carbon material in the composite particles is low, that the coat layer is a thick layer of a low-density organic material such as a tar component or polymer, that an excessive amount of silicon is precipitated on the surface of the composite particles, and the like.

The He true density of the composite particles is 2.10 g/cm$^3$ or less, preferably 2.05 g/cm$^3$ or less, and more preferably 2.00 g/cm$^3$ or less.

With the densities of carbon and silicon being generally known to be 2.26 g/cm$^3$ and 2.33 g/cm$^3$, respectively, having a He true density of 2.10 g/cm$^3$ or less is thought to mean that there are pores in the composite particles through which helium gas cannot penetrate from the outside. Therefore, because an effect of relieving stress of expansion and contraction during charging and discharging can be expected, cycle characteristics may be increased when the He true density is within the above range.

On the other hand, when the He true density exceeds 2.10 g/cm$^3$, it is thought to indicate that the carbon material in the composite particles is not amorphous, that the structure of the carbon material is not isotropic, that a large amount of silicon carbide is included, and the like. Silicon carbide has a higher density than carbon or Si, so the true density increases when silicon carbide is included in the composite particles. Moreover, because the specific volume decreases when silicon carbide is included, such is not preferable. Silicon carbide is generated when producing composite particles at high temperatures above 500°C, as described later.

The true density by dry density measurement may be measured by a vapor phase replacement method. A vapor phase replacement method is a method in which a sample and helium gas are placed in a container in which the volume has been measured in advance by helium gas in an environment maintained at a constant temperature, and a true density is calculated from a volume of the helium gas that the sample has pushed out, as well as the mass of the sample. As a device for the vapor phase replacement method, for example, the AccuPyc (registered trademark) II 1340 Gas Pycnometer manufactured by Micromeritics may be used.

The He true density can be changed by adjusting the reaction conditions (gas composition ratio, gas flow rate, temperature program, reaction time, and the like) in step (A) of the method for producing composite particles described later.

When the He true density, silicon content, and oxygen content of the composite particles are within the above range, an excessive amount of silicon is not precipitated on the surface of the composite particles, so an electrical resistivity of the powder is low.

The BA true density, which is calculated by wet density measurement using 1-butanol for the composite particles, is preferably 1.55 g/cm$^3$ or more, more preferably 1.57 g/cm$^3$ or more, and even more preferably 1.60 g/cm$^3$ or more. Having the BA true density within this range means that silicon is not excessively precipitated on the surface of the composite particles.

The BA true density of the composite particles is preferably 1.90 g/cm$^3$ or less, more preferably 1.80 g/cm$^3$ or less, and even more preferably 1.70 g/cm$^3$ or less. Having the BA true density within this range means that the carbon material in the composite particles is amorphous and that the structure of the carbon material is more isotropic.

On the other hand, silicon carbide has a higher density than carbon or Si, so the true density increases when silicon carbide is included in the composite particles.

The true density by wet density measurement may be measured by the liquid phase replacement method. Liquid phase replacement is a method in which a sample and a solvent are placed in a container in which the volume has been measured in advance, and a true density is calculated from a volume of the solvent that the sample has pushed out, as well as the mass of the sample. Generally, ethanol, 1-butanol, isopropyl alcohol, and the like may be used as the solvent. The composite particles are preferably defined by the true density, as measured by wet density measurement using 1-butanol as the solvent. As a wet density measuring device, for example, the Auto True Denser MAT-7000 manufactured by Seishin Enterprise may be used.

The BA true density can be changed by adjusting the reaction conditions (gas composition ratio, gas flow rate, temperature program, reaction time, and the like) in step (A) of the method for producing composite particles described later.

In the composite particles, He true density greater than BA true density, preferably. 1-butanol has a larger molecular size than helium, and thus composite particles having He true density greater than BA true density include closed pores that can be penetrated by helium but cannot be penetrated by 1-butanol.

During silicon filling in the method for producing composite particles, which is described later, when the surface of the composite particles is completely covered in silicon, and there are no pores on the surface, or there are only small pores such as do not allow helium to penetrate, then the He true density and BA true density are equal.

When the He true density is low and approaches the BA true density, silicon can be inferred to cover the surface of the pores through which helium on the surface of the composite particles can pass.

In a Raman spectrum of the composite particles, there is usually at least a peak at a Raman shift of 450 to 495 $cm^{-1}$, close to 1,350 $cm^{-1}$, and close to 1,580 $cm^{-1}$. Usually, crystalline silicon such as silicon wafers, particulate silicon, and heat-treated $SiO_x$ has a peak close to 520 $cm^{-1}$. Amorphous silicon has a peak at a lower Raman shift than this, indicating that the composite particles have amorphous silicon when a peak is present at 450 to 495 $cm^{-1}$. When silicon is in an amorphous state, expansion and contraction during charging and discharging are relatively isotropic, and thus cycle characteristics may be increased.[0054] When a peak intensity at 450 to 495 $cm^{-1}$ is denoted $I_{Si}$ and an intensity of the G band (peak intensity close to 1,580 $cm^{-1}$) is denoted $I_G$, the ratio $I_{Si}/I_G$ is preferably 1.3 or less, more preferably 0.94 or less, further preferably 0.64 or less, and most preferably 0.54 or less.

The appearance of a silicon peak in a Raman spectrum indicates the presence of silicon on the surface of the composite particles and/or in pores close to the surface of the composite particles. In XPS, which will be described later, information from the surface of a substance to a depth of several nm may be obtained, but in Raman spectra, it is known that information of a depth of approximately 1 μm to submicrometers from the surface may be obtained in a carbon material (hereinafter, a position of information obtained in a Raman spectrum is also referred to as "close to-surface").

When the $I_{Si}/I_G$ of the composite particles is within the above range, the surface of the composite particles is not thickly covered with components including silicon, and the powder resistivity of the composite particles tends to be low. Moreover, having the $I_{Si}/I_G$ of the composite particles within the above range indicates that the surface of the composite particles is of a configuration that includes silicon and carbon.

On the other hand, when the percentage of silicon is very high, $I_{Si}/I_G$ becomes much larger than the above range. Due to $I_{Si}/I_G$ being within the above range, the surface of the composite particles also undergoes expansion and contraction to the same extent as the inside of the composite particles during charging and discharging, and the concentration of stress from expansion and contraction on the surface of the composite particles can be avoided, leading to an improvement in cycle characteristics.

The lower limit of $I_{Si}/I_G$ is preferably 0.01, and more preferably 0.02. When $I_{Si}/I_G$ is less than 0.01, the thickness of the coat layer increases, which becomes a factor for a rise in electrical resistivity.

Note that the "peak intensity" is defined as the height from the baseline to the peak vertex after baseline correction.

The value of $I_{Si}/I_G$ may, for example, be changed by adjusting the reaction conditions (gas composition ratio, gas flow rate, temperature program, reaction time, and the like) in step (A) of the method for producing composite particles described later.

The composite particles have an R value ($I_D/I_G$), which is a ratio of the intensity of the G band $I_G$ when the intensity of the D band (peak intensity close to 1,350 $cm^{-1}$) is denoted $I_D$, preferably between 0.2 and 1.4, and more preferably between 0.26 and 1.34. If the R value is 0.2 or higher, the negative electrode using the composite particles has sufficiently low reaction resistance, leading to an improvement in the Coulomb efficiency of the battery. On the other hand, an R value of 1.4 or lower means that the carbon material has few defects. Having an R value of 1.4 or lower reduces the internal resistance of the battery and improves the rate characteristics. From the same perspective, the R value is further preferably 0.45 or higher, and particularly preferably 0.65 or higher. Moreover, the R value is further preferably 1.30 or lower, and particularly preferably 1.20 or lower.

The composite particles preferably have a half-width of the peak of the Si (111) plane in the XRD pattern, as measured by powder X-ray diffraction (powder XRD) using Cu-Kα radiation, of 3.0° or more. Having a half-width of 3.0° or more means that the crystallite size of silicon in the composite particles is small, which leads to the suppression of silicon destruction accompanying charge and discharge. From the same perspective, the half-width is preferably 4.0° or more, and more preferably 5.0° or more. Moreover, the half-width is preferably 10.0° or less, and more preferably 8.0° or less. Note that the peak of the Si (111) plane refers to the peak originating from Si, which appears close to 28° in 2θ. Moreover, the "peak intensity" when determining the half-width is defined as the height from the baseline to the peak vertex after baseline correction.

The half-width of the peak of the Si (111) plane can be increased, for example, by using a large porous carbon of $V_{0.01}/V_{0.99}$ in the method for producing composite particles described later.

The composite particles preferably have a (peak intensity of SiC (111) plane)/(peak intensity of Si (111) plane) of 0.01 or less in the XRD pattern as measured by powder X-ray diffraction (powder XRD) using Cu-Kα radiation. As a result, the composite particles include no SiC (silicon carbide) or have an extremely low content of SiC, which improves the utilization rate of silicon as a battery active material and allows for a higher initial discharge capacity. Note that the (peak intensity of SiC (111) plane)/(peak intensity of Si (111) plane) is also expressed as $I_{SiC(111)}/I_{Si(111)}$. The lower limit of $I_{SiC(111)}/I_{Si(111)}$ is 0.00, meaning that it is more preferable that the peak intensity of the SiC (111) plane is not observed. Note that the peak of the SiC (111) plane is a peak originating from SiC, which appears close to 35° in 2θ. Moreover, the peak of the Si (111) plane is a peak originating from Si, which appears close to 28° in 2θ.

The (peak intensity of SiC (111) plane)/(peak intensity of Si (111) plane) can be reduced, for example, by lowering the reaction temperature in the method for producing composite particles described later.

It is preferable that the composite particles do not include graphite therein. The presence of graphite inside the composite particles can be identified by the XRD pattern obtained from powder X-ray diffraction measurements (powder XRD) using Cu-K$\alpha$ radiation. When there is a significant presence of graphite inside the composite particles, a sharp peak originating from graphite, which appears close to 26° in 2$\theta$, can be observed. Although halos originating from carbon and silicon oxides are also observed in this vicinity at the same time, the intensity of these patterns is low, while graphite is observed as a very sharp peak with high intensity, so when the graphite peak is not observed, graphite is thought to not be substantially included in the composite particles.

For example, by using hard carbon as a carbon material or by producing composite materials without adding graphite, composite particles that do not substantially include graphite can be produced.

It is preferable that the composite particles uniformly form fine Si domains within the particles. When graphite is included inside the composite particles, the expansion and contraction during charge and discharge become uneven within the particles, and cycle characteristics decrease.

It is preferable that $D_{V50}$, which is the 50% particle diameter in the volume-based cumulative particle size distribution of the composite particles, be 1.0 $\mu$m or more. This is because having a $D_{V50}$ of 1.0 $\mu$m or more can reduce side reactions with an electrolyte. Furthermore, $D_{V50}$ is more preferably 2.0 $\mu$m or more, even more preferably 3.0 $\mu$m or more, and most preferably 3.5 $\mu$m or more. This is because it is easy to prepare a slurry with excellent handling properties and suitable viscosity and density for coating, and it is also easy to increase the density when used as an electrode.

It is preferable that the $D_{V50}$ of the composite particles be 40.0 $\mu$m or less. Having a $D_{V50}$ of 40.0 $\mu$m or less shortens the diffusion length of lithium in each particle, thus improving the rate characteristics of lithium-ion batteries and preventing streaking and/or abnormal unevenness when coating a current collector with the slurry. From this perspective, $D_{V50}$ is more preferably 20.0 $\mu$m or less, and even more preferably 15.0 $\mu$m or less.

It is preferable that the $D_{V90}$, which is the 90% particle diameter in the volume-based cumulative particle size distribution of the composite particles, be 50.0 $\mu$m or less. Having a $D_{V90}$ of 50.0 $\mu$m or less shortens the diffusion length of lithium in each particle, thus improving the rate characteristics of lithium-ion batteries and preventing streaking and/or abnormal unevenness when coating a current collector with the slurry. From this perspective, $D_{V90}$ is more preferably 40.0 $\mu$m or less, even more preferably 30.0 $\mu$m or less, and most preferably 20.0 $\mu$m or less.

The cumulative particle size distribution based on these volume standards is measured, for example, by a laser diffraction particle size analyzer.

The composite particles preferably have a BET specific surface area of 0.5 m$^2$/g or more and 30 m$^2$/g or less, more preferably 0.9 m$^2$/g or more and 20 m$^2$/g or less, and even more preferably 1.5 m$^2$/g or more and 7.0 m$^2$/g or less, particularly preferably 2.0 m$^2$/g or more and 5.0 m$^2$/g or less, and most preferably 2.5 m$^2$/g or more and 4.5 m$^2$/g or less.

Composite particles with a BET specific surface area within the above range tend to have a low composite particle electrical resistivity, without the composite particle surface being thickly covered by a component including silicon.

Having a BET specific surface area of 0.5 m$^2$/g or more can suitably adjust the slurry viscosity during electrode fabrication, allowing for the production of good electrodes. From the same perspective, the BET specific surface area is more preferably 0.9 m$^2$/g or more.

The composite particles preferably have a BET specific surface area of 30.0 m$^2$/g or less. At 30.0 m$^2$/g or less, side reactions with the electrolyte can be reduced. From the same perspective, the BET specific surface area is more preferably 25.0 m$^2$/g or less.

The BET specific surface area is usually measured by a dedicated measuring device known in the relevant technical field, and is calculated from an adsorption isotherm using a BET method. Nitrogen is usually used as the adsorbed gas.

The composite particles have atomic number ratios of Si, O, and C based on narrow spectra from X-ray photoelectron spectroscopy (XPS) denoted $A_{Si}$, $A_O$, and $A_C$, respectively, and among Si-type ratios of Si 2p spectral state analysis, the ratios of SiO$_2$ and SiO are denoted $B_{SiO2}$ and $B_{SiO}$,

and it is preferable that $A_{Si}$ be 0.05 or more and that $A_C/(A_C + A_{Si} \times (B_{SiO2} + B_{SiO}))$ be 0.55 or more.

Note that $A_{Si} + A_O + A_C = 1.00$.

XPS is a method for obtaining information about the types, amounts, and chemical bonding states of elements present on the surface of a material, and it is known that information can be obtained to a depth of several nm from the surface of the material.

<1> $A_{Si}$

Having an $A_{Si}$ of 0.05 or more means that when the composite particles have a coat layer on the particle surface, the coat layer is thin. When the coat layer is thin, the electrical resistivity of the composite particles is low. $A_{Si}$ is preferably 0.15 or more, and more preferably 0.25 or more. Since the analysis depth of XPS is very shallow, at several nm, an ability for peaks derived from Si to be observed to some extent means that the coat layer is extremely thin (less than several nm).

The coat layer has lower electronic conductivity compared to that of a carbon coat. The electrical resistivity of the composite particles increases when the coat layer is too thick, and thus the layer must be thin.

$$<2> \ A_C/(A_C + A_{Si} \times (B_{SiO2} + B_{SiO}))$$

The value of $A_C/(A_C + A_{Si} \times (B_{SiO2} + B_{SiO}))$ is an indicator of the carbon concentration at a position of a depth several nm from the surface of the composite particles (the depth of spatial resolution in XPS). Si is thought to exist as oxides such as $SiO_2$ and SiO on the surface of the composite particles, and moreover, most of the surface of the composite particles is thought to be formed with carbon and silicon oxides such as $SiO_2$ and SiO. Note that it is also thought that a very small part of the surface of the composite particles may be formed by carbon oxides. When carbon oxides are present on the surface of the composite particles, the number of carbon atoms derived from the carbon oxides is also included in $A_C$.

However, $A_C$ includes information about carbon in the composite particles not only on the surface but also at positions of a depth several nm from the surface, and as such, this index is not a reflection of the carbon concentration of the coat layer alone.

Having a large $A_C/(A_C + A_{Si} \times (B_{SiO2} + B_{SiO}))$ indicates a high carbon concentration on the surface of the composite particles. An oxidation suppression ability improves as this carbon concentration increases. In other words, the composite particles become less prone to oxidation.

Having an $A_C/(A_C + A_{Si} \times (B_{SiO2} + B_{SiO}))$ of 0.55 or higher means that the carbon concentration on the surface increases, as well as the oxidation suppression ability. Therefore, $A_C/(A_C + A_{Si} \times (B_{SiO2} + B_{SiO}))$ is preferably 0.55 or higher, more preferably 0.70 or higher, and even more preferably 0.80 or higher. Moreover, it is preferable that $A_C/(A_C + A_{Si} \times (B_{SiO2} + B_{SiO}))$ be 0.98 or lower. Exceeding 0.98 means that the silicon oxide on the surface is too low, indicating a low oxidation suppression ability.

Although the structure of the coat layer cannot be defined, having an $A_C/(A_C + A_{Si} \times (B_{SiO2} + B_{SiO}))$ within the above range is thought to indicate that the coat layer is a thin film layer in which carbon, silicon, and oxygen on the surface of the composite particles form a composite. The coat layer is preferably a thin film layer in which surface carbon and silicon oxides form a composite.

The value of $A_C/(A_C + A_{Si} \times (B_{SiO2} + B_{SiO}))$ may be changed, for example, by adjusting the reaction temperature, reaction time, reaction pressure, or type or concentration of a hydrocarbon in step (B) in the method for producing composite particles described later.

When the composite particles have a coat layer, it is preferable that the coat layer includes compounds derived from a hydrocarbon. The presence of compounds derived from a hydrocarbon in the coat layer may be determined by performing thermal decomposition GC-MS measurements of the composite particles, as compounds derived from a hydrocarbon are included in the gas generated from the composite particles between 200°C and 600°C.

The coat layer may be produced by bringing Si/C particles into contact with a hydrocarbon having an unsaturated bond at a low temperature and then oxidizing the obtained substance. Details will be described later.

In the coated composite particles, it is preferable that the coat layer be thin enough to be substantially unmeasurable by cross-sectional observation using an electron microscope. When the coat layer is thin, as described above, the composite particles have a low electrical resistivity. Scanning electron microscopes (SEM) do not have sufficient resolution to distinguish thicknesses of a few nm, and therefore cannot measure the thickness of coat layers thinner than that. Transmission electron microscopes (TEM) have sufficient resolution and can observe thicknesses of a few nm, but when preparing a sample for TEM observation of a thin film including a coat layer of composite particles, the coat layer of the composite particles is damaged and destroyed by processing, making it impossible to observe the thickness of the coat layers with TEM in practice. "Substantially unmeasurable" refers to such a state. However, even for a thin film that is substantially unmeasurable by cross-sectional observation using electron microscopy, the presence of the coat layer may be confirmed from the above XPS.

As mentioned above, it is preferable that the expansion and contraction during charging and discharging be uniform within the particles, so the shape of the composite particles is preferably such that the average aspect ratio is 1.25 or less, and it is more preferable that a portion of the particles have no corners. It is even more preferable that the composite particles be spherical (with a cross-section of the composite particles being circular). An aspect ratio is the value obtained by dividing the long diameter of the particle by the short diameter. An aspect ratio of 1.00 indicates that the long and short diameters are equal, so the closer the average aspect ratio is to 1.00, the more preferable it is.

A circularity may be determined by an average circularity calculated from the cross-sectional shape. An average circularity of 0.95 or more and 1.00 or less is preferable. Circularity is expressed by the following formula.

$$(\text{Circularity}) = 4\pi \times (S \ / \ L^2)$$

Here, S is the particle cross-sectional area [$m^2$], and L is the particle perimeter [m].

The above average aspect ratio and average circularity can be calculated by analyzing images obtained from scanning electron microscopy (SEM) using image analysis software. The analysis is performed on 20 composite particles randomly selected from SEM photographs, and the average value (number average) of the 20 is used for determination.

As image analysis software, for example, ImageJ is available.

The average aspect ratio and average circularity can be adjusted by using porous carbon that meets the above conditions in the method for producing composite particles described later.

[2] method for producing composite particles

The method for producing composite particles according to the present invention has the following step (A). By the method for producing composite particles according to the present invention, it is possible to obtain the composite particles according to the present invention, that is, the composite particles described in [1].

Step (A): A step of bringing a gas including a silicon-including-gas at an amount satisfying the following condition (2) into contact with a porous carbon satisfying the following condition (1) at 300°C or more and 500°C or less to precipitate silicon in the pores and on the surface of the porous carbon

Condition (1): In a nitrogen gas adsorption test, a pore volume when a relative pressure $P/P_0$ is 0.01 is denoted $V_{0.01}$, and a pore volume when the relative pressure $P/P_0$ is 0.99 is denoted $V_{0.99}$, where $V_{0.99}$ is between 0.4 $cm^3/g$ and 1.5 $cm^3/g$, $V_{0.01}/V_{0.99}$ is 0.4 or more, preferably between 0.4 and 0.66, and a true density by dry density measurement using helium gas is between 1.90 $g/cm^3$ and 2.30 $g/cm^3$.

Condition (2): The volume of silicon when all silicon-including gas is converted to silicon is 1.4 times the $V_{0.99}$ of the porous carbon, or less.

A carbon material having pores is referred to as "porous carbon" in the present invention. Since it is preferable for composite particles to have a structure including silicon within the particles, it is preferable for the porous carbon to have a pore volume that can carry silicon inside. Moreover, in the nitrogen gas adsorption test of the carbon material (porous carbon), the pore volume when a relative pressure $P/P_0$ is 0.99 is denoted $V_{0.99}$, and $V_{0.99}$ is more preferably between 0.5 $cm^3/g$ and 1.5 $cm^3/g$. Moreover, it is preferable from the viewpoint of reducing electrical resistivity that $V_{0.99}$ be between 0.85 $cm^3/g$ and 1.0 $cm^3/g$.

Since it is preferable for silicon to be included as fine domains within the composite particles, it is even more preferable for the porous carbon to have many fine pores. Specifically, $V_{0.01}/V_{0.99}$ is preferably 0.40 or more, more preferably 0.45 or more, and most preferably 0.50 or more. The nitrogen gas adsorption test may be performed using a known method.

Therefore, the porous carbon preferably has a pore volume that allows for silicon to be carried therein, and has fine pores. Specifically, in a nitrogen gas adsorption test, a pore volume when a relative pressure $P/P_0$ is 0.01 is denoted $V_{0.01}$, and a pore volume when the relative pressure $P/P_0$ is 0.99 is denoted $V_{0.99}$, where it is preferable that $V_{0.99}$ be between 0.4 $cm^3/g$ and 1.5 $cm^3/g$, $V_{0.01}N_{0.99}$ be 0.4 or more, and a true density by dry density measurement using helium gas be between 1.90 $g/cm^3$ and 2.30 $g/cm^3$.

The porous carbon may or may not include a component other than carbon within a range that does not hinder performance. It is preferable that 90 mass% or more of the porous carbon be carbon, and 95 mass% or more is more preferable.

As porous carbon, for example, activated carbon, activated carbon fibers, molecular sieving carbon, or inorganic template carbon can be used. Moreover, porous carbon obtained by activating hard carbon with steam or carbon dioxide can be used. It is preferable that a porous carbon meeting the above conditions be selected for use. In the case of larger materials such as activated carbon fibers, pulverizing into particles may be performed before step (A), or pulverizing into particles may be performed after silicon is carried. Moreover, the porous carbon may be an aggregate and granule of a plurality of particles. When the porous carbon is an aggregate or granule, the porous carbon may be pulverized into particles before step (A), or may be pulverized into particles after silicon is carried.

Hard carbon can be obtained by heat treating phenolic resin in an inert atmosphere at 500°C to 1,400°C, preferably 600°C to 1,200°C.

It is preferable that the porous carbon be adjusted to a desired shape or particle size distribution of the composite particles before carrying out step (A). This is because the shape and particle size distribution of the particles do not change much in step (A), and the shape and particle size distribution of the composite particles remain the same as those of the porous carbon. Therefore, the porous carbon used in step (A) may be crushed or pulverized and sieved.

The porous carbon is preferably spherical. Spherical porous carbon that has been carbonized and activated from spherical phenolic resin is more preferable. Moreover, spherical porous carbon that has not undergone a pulverizing step is even more preferable because the spherical shape can be maintained.

Step (A) involves placing the porous carbon in a reactor and bringing a silicon-including gas into contact with the porous carbon to deposit silicon in the pores and on the surface of the porous carbon, thereby obtaining composite particles (Si/C particles).

As the silicon-including gas, silane gas is preferably used. Silane gas may be used in a mixture with an inert gas such as helium or argon, or with a reducing gas such as hydrogen.

During silicon filling, silicon deposits in the pores of the porous carbon as well as on the surface of the porous carbon. However, if an excessive amount of silicon-including gas is reacted with the porous carbon, silicon will deposit excessively on the surface of the composite particles, resulting in a higher electrical resistivity of the powder measured in the state of the powder, which is an aggregate of composite particles. Therefore, the amount of silicon-including gas to be reacted should be such that the volume of silicon when all the silicon-including gas is converted to silicon is 1.4 times the volume of the porous carbon $V_{0.99}$ or less, preferably 1.3 times or less, and more preferably 1.2 times or less. Note that the density of silicon used for volume calculation of silicon is 2.33 g/cm$^3$. Moreover, the "volume of silicon" refers to the volume of silicon per unit mass of porous carbon (cm$^3$/g).

When the amount of silicon-including gas is too low, deposition of silicon in the pores of the porous carbon is insufficient, leading to an excessively large BET specific surface area, so the lower limit of the amount of silicon-including gas to be reacted is preferably 0.5 times or more, and more preferably 0.6 times or more.

Note that "conversion" refers to the reaction of silicon-including gas with porous carbon to deposit silicon on the surface and in the pores of the porous carbon.

The form of the reactor is not limited. As a reactor, a furnace having a stirring function for powders such as a stationary furnace, a fluidized bed furnace, and a rotary kiln, as well as a continuous furnace such as roller hearth kiln and pusher furnace can be used.

The reaction temperature is not limited as long as a silicon-including gas such as silane gas decomposes and deposits silicon in the pores of the porous carbon at the temperature, but is preferably between 300°C and 500°C. At temperatures below 300°C, the decomposition of silane gas does not occur sufficiently, resulting in inadequate silicon deposition. When the temperature exceeds 500°C, the decomposition of silane gas occurs within the pores of the porous carbon, and silicon deposition on the surface of the porous carbon (including the openings of the pores) becomes more pronounced than silicon deposition within the pores, leading to insufficient deposition inside the pores as the pore openings get blocked by the deposited silicon.

Even at temperatures of 500°C and below, the decomposition of silane occurs on the surface of the porous carbon, and silicon is deposited. In general, the surface area of the pores in porous carbon is much larger than the external surface area, resulting in a significantly greater amount of silicon being deposited within the pores of the porous carbon. It is preferable for silicon to be present within the pores rather than on the external surface of the porous carbon, as this enhances the durability of the composite particles against the stresses associated with the expansion and contraction of silicon during battery charge and discharge. At higher processing temperatures, deposition on the surface of the porous carbon becomes more pronounced, increasing the number of areas where the openings of the pores are blocked.

As the deposition of silicon within the pores of the porous carbon increases, a reaction temperature of 450°C or lower is preferable, with 420°C or lower being even more preferable. Conditions such as gas composition ratio, gas flow rate, and temperature program are adjusted as appropriate while observing the properties of the composite particles.

The method for producing the composite particles preferably includes the following step (B) in addition to the step (A).

Step (B): A step of bringing a gas including a hydrocarbon having an unsaturated bond into contact with the particles obtained in the step (A) at a temperature of 500°C or lower The composite particles obtained in step (B) are composite particles with a coat layer.

Step (B) involves placing the Si/C particles obtained in step (A) in a reactor and bringing a gas including a hydrocarbon having an unsaturated bond into contact with the Si/C particles at a temperature of 500°C or lower.

The coat layer in the coated composite particles is thin. Methods that deposit carbon on the surface, such as carbon CVD, are not suitable because they form thick carbon coatings. It is preferable to react the Si-H groups on the surface of the Si/C particles with a hydrocarbon including an unsaturated bond to form a layer including a hydrocarbon on the surface of the Si/C particles.

The layer including a hydrocarbon may include substances that have reacted with each other among the hydrocarbon. As a gas of a hydrocarbon having an unsaturated bond, a gas of a hydrocarbon having a double or triple bond may be used. When the hydrocarbon is a compound that does not gasify at normal pressure due to low vapor pressure, the hydrocarbon can be used at a pressure lower than normal pressure.

The hydrocarbon having an unsaturated bond is preferably acetylene, ethylene, propylene, or 1,3-butadiene, which are gases at normal pressure, with acetylene or ethylene being more preferable. At this time, it is acceptable to use a plurality of types of hydrocarbons. Moreover, it is permissible to mix and use an inert gas such as helium or argon, or a reducing gas such as hydrogen.

In step (B), treatment at a low temperature of 500°C or below is required. The reaction temperature in step (B) is preferably 450°C or below from the perspective of preventing the formation of silicon carbide, and more preferably 420°C or below. Moreover, from the perspective of not requiring a heating process and the decomposition of Si-H groups accompanied by hydrogen generation, the reaction temperature in step (B) is preferably at or below the temperature of step (A).

If the temperature exceeds 500°C, the amount of Si-H groups that decompose increases, making it difficult for the desired reaction, that is, the reaction between the Si-H groups on the surface of Si/C particles and the unsaturated bond of the hydrocarbon, to occur. Moreover, since the reactivity of silicon in Si/C particles is very high, at high temperatures exceeding 500°C, a reaction occurs between porous carbon and silicon, resulting in the generation of silicon carbide, which decreases the specific capacity of the composite particles.

There is no restriction on the lower limit of the reaction temperature as long as it is a temperature at which the hydrocarbon having an unsaturated bond reacts on the surface of Si/C particles, but since the reaction rate is low at low reaction temperatures, the temperature is preferably 100°C or higher, and more preferably 150°C or higher.

The thickness of the layer including the hydrocarbon may be a thickness corresponding to the molecular layer of a hydrocarbon, or may be a thickness corresponding to several molecular layers. Moreover, part of the hydrocarbon may be decomposed. Even if part of the hydrocarbon decomposes into carbon, the layer including the hydrocarbon is preferably a thin film because it is a material with a high electrical resistivity, unlike carbon coatings. Therefore, it is preferable that the weight change before and after step (B) be small. The increase in mass of Si/C particles having the layer including a hydrocarbon obtained in step (B) relative to the mass of Si/C particles before step (B) is more preferably 1.0 mass% or less, and even more preferably 0.5 mass% or less.

It is preferable that steps (A) and (B) be carried out continuously. The Si/C particles obtained in step (A) have a high reactivity of the surface silicon, so when exposed to the atmosphere, oxidation progresses, and the Si-H groups on the surface are reduced. Therefore, it is preferable that steps (A) and (B) be carried out continuously without exposure to the atmosphere (air). It is preferable to use the same equipment for steps (A) and (B) because it is easier to implement continuously. The time between steps (A) and (B) is not limited as long as the Si/C particles are not exposed to the atmosphere. For example, after step (A), it is permissible to perform step (B) after storing under an inert atmosphere. Moreover, if the Si/C particles obtained in step (A) do not come into contact with the atmosphere, it is permissible to use different equipment for steps (A) and (B).

Moreover, it is permissible to carry out the step (A2) illustrated below after step (B).

Step (A2): A process of bringing a gas including a silicon-including gas into contact at a temperature of 300°C to 500°C

Furthermore, step (B) and step (A2) may be carried out a plurality of times. For example, a method may include performing step (B) followed by step (A2), and then continuing with step (B). When step (B) is performed after step (A2), the "particles obtained in step (A)" become the particles obtained in step (A2).

The method for producing the composite particles preferably includes the following step (C) in addition to the steps (A) and (B).

Step (C): A process of oxidizing the particles obtained in the step (A) (Si/C particles) or the particles obtained in the step (B) (coated composite particles)

In a method for producing composite particles wherein step (C) is performed on the particles obtained in the step (A) without performing the step (B), there is the concern that oxidation may progress when the composite particles are stored in air because of the fact that a reaction does not ensue due to a hydrocarbon having an unsaturated bond, but the process is simpler.

In the coated composite particles obtained through the step (B), this step (C) is a process of introducing oxygen into the coat layer (more precisely, the layer including a hydrocarbon formed on the surface of the composite particles in step (B)). Although the structure of the coat layer is not clear, the inclusion of oxygen in the coat layer improves the oxidation suppression ability and lowers the electrical resistivity. Oxidation can be performed by bringing the coat layer into contact with a gas including oxygen (more specifically, an oxidizing gas). A gas including oxygen preferably has an oxygen concentration of 1 to 25 vol%, more preferably 1 to 20 vol%, and even more preferably 5 to 20 vol%. In that case, the oxygen is diluted using argon or nitrogen. Air may be used as a gas including oxygen, but to perform stable oxidation, it is preferable that the humidity of the air be adjusted and maintained.

After bringing the particles obtained in the step (A) or the coated composite particles obtained through the step (B) into contact with a gas including oxygen, it is preferable that a heat treatment be performed under an inert atmosphere or at a low pressure. The temperature during heat treatment is preferably 400°C or below. By performing heat treatment at or below 400°C, it is believed that unreacted Si-H groups may be decomposed and converted into silicon, thereby stably implementing the oxygenic formation of a composite in the coat layer. The heat treatment time is, for example, 0.1 to 100 hours.

The reaction temperature of step (C) is preferably between room temperature and 200°C. Exceeding 200°C is not preferable as it may cause decomposition of the coat layer or excessive oxidation of silicon.

The reaction time of step (C) is, for example, 0.1 to 120 hours.

In step (C), it is acceptable to change the oxygen concentration for oxidation treatment.

Different devices may be used in step (C) than are used in step (B). Moreover, it is acceptable to carry out steps (B) and (C) a plurality of times. Examples of methods include: performing step (C) followed by step (B), performing step (C) then performing step (B) and continuing to perform step (C), and the like. When performing step (C) followed by step (B), the "particles obtained in step (C)" correspond to the "particles obtained in step (A)" in step (B).

After producing composite particles through steps (A), (B), and (C), the particles may agglomerate. In that case, it is preferable that disintegration be performed, returning the particles to the shape and particle size distribution of the porous carbon raw material.

[3] Negative electrode active material

The negative electrode active material according to the present invention includes the composite particles according to the present invention. The composite particles may be used by mixing two or more types. The negative electrode active material may further include another component. Examples of other components include those commonly used as negative electrode active materials in lithium-ion rechargeable batteries. For example, graphite, hard carbon, soft carbon, lithium titanate ($Li_4Ti_5O_{12}$), silicon, tin, and other alloy-based active materials, a composite material thereof, and the like can be mentioned. These components are usually used in particle form. One type of a component other than the composite particles may be used, or two or more types may be used. Among these, graphite particles and hard carbon are particularly preferable.

When including another component to form the negative electrode active material, the composite particles are adjusted to usually be 1 to 50 mass%, preferably 2 to 25 mass%, in the negative electrode active material. By mixing the other component, it is possible to create a negative electrode active material that maintains the excellent properties of the composite particles while also possessing the excellent properties of another carbon material. When using a plurality of types of materials as negative electrode active materials, such may be used after mixing in advance, or may be added sequentially when preparing the slurry for forming the negative electrode mixture, as described later.

As a device for mixing composite particles with other materials, commercially available mixers and stirrers can be used. Specific examples include mixers such as those for mortar, ribbon mixers, V-type mixers, W-type mixers, one-blade mixers, and Nauta mixers.

[4] Negative electrode composite layer

The negative electrode composite layer according to the present invention includes the negative electrode active material according to the present invention.

The negative electrode composite layer can be used as a negative electrode composite layer for lithium-ion rechargeable batteries. The negative electrode composite layer generally consists of a negative electrode active material, a binder, and a conductivity aid as an optional component.

The method for producing the negative electrode composite layer can utilize a known method such as, for example, that illustrated below. Using the negative electrode active material, binder, conductivity aid as an optional component, and solvent, a slurry is prepared to form the negative electrode composite. The slurry is coated onto a current collector such as a copper foil and dried. This is further vacuum dried to remove the solvent. The obtained product may be referred to as a negative electrode sheet. The negative electrode sheet consists of the negative electrode composite layer and the current collector. The negative electrode sheet is cut or punched into a required shape and size, then pressed to improve the density of the electrode composite layer (which may be referred to as electrode density). An energy density of the battery is improved when electrode density is improved. The pressing method is not particularly limited as long as the process can achieve a desired electrode density, but uniaxial pressing, roll pressing, and the like can be mentioned. The order of shape processing and pressing is not restricted. Pressing may be performed after shape processing, or shape processing may be performed after pressing. An electrode in a desired shape and electrode density is referred to as a negative electrode in the present invention. The negative electrode may also further include that which is in a state where a current collector is attached with a current collector tab as needed.

As a binder, any binder commonly used in the negative electrode composite layer of a lithium-ion rechargeable battery can be freely selected. Examples of binders include: polyethylene, polypropylene, ethylene-propylene terpolymer, butadiene rubber, styrenebutadiene rubber (SBR), butyl rubber, acrylic rubber, polyvinylidene fluoride (PVdF), polytetrafluoroethylene (PTFE), polyethylene oxide, polyepichlorohydrin, polyphosphazene, polyacrylonitrile, carboxymethyl cellulose (CMC) and salts thereof, polyacrylic acid, and polyacrylamide. One type of binder may be used, or two or more types may be used. The amount of binder is preferably 0.5 to 30 parts by mass relative to 100 parts by mass of the negative electrode material.

The conductivity aid is not particularly limited so long as it serves to impart electronic conductivity and dimensional stability (the ability to absorb volume changes due to the insertion and removal of lithium) to the electrode. Examples of conductivity aids include carbon nanotubes, carbon nanofibers, vapor-phase carbon fibers (for example, "VGCF (registered trademark)-H" produced by Showa Denko K.K.), conductive carbon black (for example, "Denka Black (registered trademark)" produced by Denka Co., Ltd., "SUPERC65" produced by Imerys Graphite & Carbon, and "SUPERC45" produced by Imerys Graphite & Carbon), and conductive graphite (for example, "KS6L" produced by Imerys Graphite & Carbon, and "SFG6L" produced by Imerys Graphite & Carbon). A plurality of types of these conductivity aids may be used.

The conductivity aid preferably includes carbon nanotubes, carbon nanofibers, or vapor-phase carbon fibers, and the fiber length of these conductivity aids is preferably at least 1/2 of the $D_{V50}$ of the composite particles. With this length, these conductivity aids serve as a bridge between the negative electrode active materials including the composite particles, improving cycle characteristics. Furthermore, a conductivity aid of a single-wall type or multi-wall type with a fiber diameter of 15 nm or less is preferable from the perspective of increasing the number of bridges compared to other conductivity aids added at the same amount of addition. Moreover, being more flexible, such is preferable from the perspective of improving electrode density.

The amount of the conductivity aid is preferably 1 to 30 parts by mass relative to 100 parts by mass of the negative electrode material.

There are no particular restrictions on the solvent used when preparing the slurry for electrode coating, and examples include N-methyl-2-pyrrolidone (NMP), dimethylformamide (DMF), isopropanol, tetrahydrofuran (THF), and water. In the case of a binder using water as a solvent, it is also preferable that a thickener be used in combination. The amount of solvent can be adjusted to a viscosity that allows the slurry to easily coat the current collector.

[5] Lithium-ion rechargeable batteries

The lithium-ion rechargeable battery according to the present invention includes a negative electrode composite layer according to the present invention. The lithium-ion rechargeable battery usually includes a negative electrode consisting of the negative electrode composite layer and current collector, a positive electrode consisting of the positive electrode composite layer and current collector, at least one of a non-aqueous electrolyte and non-aqueous polymer electrolyte present therebetween, a separator, and a battery case that houses these components. The lithium-ion rechargeable battery may include the negative electrode composite layer, and another configuration can be adopted without particular limitation, including conventionally known configurations.

The positive electrode composite layer usually consists of a positive electrode material, a conductivity aid, and a binder. A general configuration found in a usual lithium-ion rechargeable battery can be used for the positive electrode in the lithium-ion rechargeable battery.

As the positive electrode active material, there are no particular restrictions on material as long as the material allows for reversible electrochemical lithium insertion/extraction and has a standard redox potential sufficiently higher than that of a negative electrode reaction. Examples of the positive electrode active material include: $LiCoO_2$, $LiNiO_2$, $LiMn_2O_4$, $LiCo_{1/3}Mn_{1/3}Ni_{1/3}O_2$, $LiCo_{0.6}Mn_{0.2}Ni_{0.2}O_2$, $LiCo_{0.8}Mn_{0.1}Ni_{0.1}O_2$, carbon-coated $LiFePO_4$, or suitable mixtures thereof.

A conductivity aid, binder, and solvent mentioned in the negative electrode composite layer section may be used for slurry preparation. Aluminum foil is preferably used as the current collector.

For a non-aqueous electrolyte and non-aqueous polymer electrolyte used in a lithium-ion battery, a known electrolyte for a lithium-ion rechargeable battery may be used, and a lithium salt such as $LiClO_4$, $LiPF_6$, $LiAsF_6$, $LiBF_4$, $LiSO_3CF_3$, and $CH_3SO_3Li$ may be used, which are dissolved in a following solvent and polymer. Examples of solvents include: non-aqueous solvents such as ethylene carbonate, diethyl carbonate, dimethyl carbonate, ethyl methyl carbonate, propylene carbonate, butylene carbonate, acetonitrile, propionitrile, dimethoxyethane, tetrahydrofuran, and γ-butyrolactone; gel-like polymers containing polyethylene oxide, polyacrylonitrile, polyvinylidene fluoride, and polymethyl methacrylate; and polymers having an ethylene oxide bond.

Moreover, a small amount of an additive commonly used in electrolytes for lithium-ion batteries may be added to the non-aqueous electrolyte. Examples of such substances include: vinylene carbonate (VC), biphenyl, propanesultone (PS), fluoroethylene carbonate (FEC), and ethylene sultone (ES), where VC and FEC are preferable. The amount of addition is preferably 0.01 to 20 mass% relative to 100 mass% of the non-aqueous electrolyte.

As a separator, any material that can be used in a typical lithium-ion rechargeable battery may be freely selected, including combinations thereof, such as microporous films made of polyethylene or polypropylene. Such separators can also include particles such as $SiO_2$ and $Al_2O_3$ which are used by being mixed as a filler or adhered to the surface.

As a battery case, there are no particular restrictions as long as the positive and negative electrodes, separator, and electrolyte can be accommodated. In addition to commercially available battery packs, cylindrical cells of type 18650, coin-type cells, and other standardized forms in the industry, those packed in aluminum packaging can be freely designed and used.

Each electrode can be stacked and packed for use. Moreover, single cells can be connected in series and used as batteries and modules.

**Examples**

The present invention will be described in detail below by presenting examples and comparative examples, but the present invention is not limited to these examples.

The measurement of physical properties and battery evaluation were conducted as follows.

[1] Measurement of physical properties

[1-1] Dry true density measurement

After vacuum drying a sample at 180°C for 12 hours, the sample was filled in the measurement cell to 40 to 60% under a dry argon atmosphere in a glove box, and the weight of the sample was measured after tapping the cell more than 100 times. The sample was then taken out into the atmosphere and, via the following method, dry density measurement was performed by the constant volume expansion method using helium gas, and an He true density was calculated.

    Device: Micromeritics AccuPyc (registered trademark) II 1340 Gas Pycnometer
    Measurement cell: Aluminum, depth 39.3 mm, inner diameter 18 mm
    Carrier gas: Helium gas
    Gas pressure: 19.5 psiG (134.4 kPaG)
    Number of purges during measurement: 200 times, temperature: 25°C $\pm$ 1°C

[1-2] Wet true density measurement

Wet density measurement was performed by the liquid phase replacement method using the following device, and the BA true density was calculated.

    Device: Seishin Corporation Auto-TruDensitometer MAT-7000
    Measurement cell volume: approximately 40 cm$^3$
    Measurement sample volume: approximately 10 mL
    Wait time: 5 minutes
    Vacuum time: 30 minutes
    Solvent used: 1-butanol

[1-3] Silicon content ratio

The silicon content ratio of the sample was measured under the following conditions.

    Fluorescent X-ray device: Rigaku Corporation, NEX CG
    Tube voltage: 50 kV
    Tube current: 1.00 mA
    Sample cup: $\varphi$ 32 12 mL CH1530
    Sample weight: 2 to 3 g
    Sample height: 5 to 18 mm

The sample cup was filled with the sample, which was measured by the above method, and the silicon content ratio in the composite particles was calculated in mass% using the fundamental parameter (FP method).

[1-4] Oxygen content ratio

A 20 mg sample was weighed in a nickel capsule, and the oxygen content ratio in the composite particles was calculated in mass% using the oxygen-nitrogen analysis device EMGA (registered trademark) -920 (manufactured by Horiba, Ltd.). The carrier gas used was argon. By dividing the oxygen content ratio in the composite particles by the above silicon content ratio, the oxygen content ratio when the silicon content ratio in the composite particles was set to 100 mass% was obtained in mass%.

The measurement of the oxygen content ratio was conducted within two days after the production of the composite particles.

[1-5] Powder electrical resistivity

The measurement of the sample's powder electrical resistivity was conducted under the following conditions.

0.4 g of the sample was placed in a powder resistivity measurement cell with a compression surface of 5 mm x 10 mm, and a small vibrator was applied to the powder resistivity measurement cell to sufficiently level the powder inside the cell. The powder resistivity measurement and the electrical resistivity measurement device were connected, and the powder resistivity measurement cell was fixed to the compression device to measure the electrical resistivity of the powder while compressing it. The volume of the compressed powder which was filled in the powder resistivity measurement cell was calculated from the compression height of the compression device at a pressure of $1 \times 10^7$ N/m$^2$ and the area of the compression surface of the powder resistivity measurement cell, and the resistivity per unit volume (volume resistivity ($\Omega \cdot$cm)) was calculated from the calculated volume of the powder and the electrical resistivity.

[Device]

Compression device: A&D Tensilon universal material testing machine RTG-1310 electrical resistivity measurement device

Current generation device: ADCMT's DC Voltage Current Source 6146
Voltmeter: Tsuruga Electric's 4257-01, 4257-03 [Conditions] Compression condition: 5 mm/min

[1-6] BET specific surface area and pore volume (nitrogen adsorption test)

Using the Quantachrome NOVA (registered trademark) 4200e as the measuring device, the sample was placed in a sample cell (9 mm $\times$ 135 mm) to achieve a total surface area of 2 to 60 m$^2$, dried for 1 hour under vacuum conditions at 300°C, the sample weight was measured, and measurement was performed. Nitrogen was used as the gas for measurement.

The minimum relative pressure setting during measurement was 0.005, and the maximum relative pressure setting was 0.995. The BET specific surface area of the porous carbon material was calculated from the adsorption isotherm data below a relative pressure of 0.08 near 0.005 using the BET multi-point method. The BET specific surface area of the composite particles was calculated from the adsorption isotherm data at three points near relative pressures of 0.1, 0.2, and 0.3 using the BET multi-point method. The pore volume $V_{0.99}$ was determined by calculating the adsorption amount at a relative pressure of 0.99 using linear approximation from the adsorption isotherm data at two points around a relative pressure of 0.99, and by using the standard molar volume of nitrogen, the density of liquid nitrogen, and the atomic weight of nitrogen. The pore volume $V_{0.01}$ at a relative pressure of 0.01 was determined similarly to $V_{0.99}$ by calculating the adsorption amount at a relative pressure of 0.01 using linear approximation from the adsorption isotherm data at two points around a relative pressure of 0.01.

At this time, the density of liquid nitrogen was calculated as 0.808 (g/cm$^3$), the standard molar volume of nitrogen as 22.4133 L, and the atomic weight of nitrogen as 14.0067.

[1-7] Particle size distribution measurement

One scoop of a very small spatula of the sample and two drops of a 100-fold diluted solution of a non-ionic surfactant (SARAYA Co., Ltd., Coconut Detergent High Power) at 32 mass% were added to 15 mL of water, and this was ultrasonically dispersed for 3 minutes. The following method was used to measure this dispersion.

Device: Seishin Corporation's laser diffraction particle size distribution measuring instrument (LMS-2000e)
Analysis: The volume-based cumulative particle size distribution was calculated, and the 10% particle diameter $D_{V10}$ ($\mu$m), 50% particle diameter $D_{V50}$ ($\mu$m), and 90% particle diameter $D_{V90}$ ($\mu$m) were determined.

[1-8] Raman Si peak, $I_{Si}/I_G$, Raman R value ($I_D/I_G$)

Measurements were conducted under the following conditions.

Micro-Raman spectrometer: Horiba Ltd. LabRAM (registered trademark) HR Evolution Excitation wavelength: 532 nm
Exposure time: 10 seconds
Accumulation count: 2 times
Diffraction grating: 300 lines/mm (600 nm)

Measurement sample: Used a small spatula to place composite particles on a glass slide, ensuring the powder was uniform. Widened beyond the measurement range below.

Measurement range: 80 $\mu$m vertically $\times$ 100 $\mu$m horizontally. Only composite particles were spread within the measurement range.

Number of points: Conducted 100 point measurements with a vertical feed of 17.8 μm and a horizontal feed of 22.2 μm, obtained averaged spectra, and performed the following analysis.

Observed the Si peak at 450 to 495 cm$^{-1}$ in the Raman spectrum.

The intensity of this Si peak is denoted $I_{Si}$, and the ratio of the peak intensity ($I_G$) close to 1,580 cm$^{-1}$ is ($I_{Si}/I_G$).

[Example 1]

[Resin Synthesis]

180.0 g of pre-melted phenol (Kanto Chemical Co., Inc.), 149.5 g of polyvinyl alcohol (GM-14R (18 mass% solid content aqueous solution), Mitsubishi Chemical Corporation), and 180 g of water were added in a 1 L flask connected to a dropping funnel which is equipped with a cooling tube and stirrer, and stirred at 50°C, 150 rpm. Additionally, 0.971 g of 74.1 mass% tetrahydroxymethyl phosphonium sulfate aqueous solution (THPS, Tokyo Chemical Industry Co., Ltd.) was added to the raw material phenol, and while stirring at 50°C, 5.4 g of triethylamine (Kanto Chemical Co., Inc.) was added. Then, 383.4 g of 37 mass% formaldehyde aqueous solution (Kanto Chemical Co., Inc.) was added over approximately 2 minutes, and the reaction solution was heated to reflux temperature.

Two hours after starting reflux, 9.0 g of triethylamine (Kanto Chemical reagent) was added.

Three hours and 30 minutes after starting reflux, 5.4 g of triethylamine (Kanto Chemical reagent) was added.

Approximately 200 mL of water was added to the reaction solution, to make a total of 1L, and centrifuged at 6,000 rpm for 5 minutes using a high-speed cooling centrifuge (CR21-N, himac Eppendorf Group). A 300 mL supernatant portion was removed. 300 mL of water was added, and this was centrifuged at 6,000 rpm for 5 minutes. A 400 mL supernatant portion was removed.

The remaining sediment portion was spread in a tray and dried at 120°C for 18 hours using a WFO-400 hot air dryer. 50 g of the dried material was crushed for 30 seconds with a Wonder Blender (WB-1, imported, distributor: Osaka Chemical Co., Ltd.) to obtain a dry resin.

[Carbonization]

90 g of the obtained dry resin was loaded into a tubular furnace and carbonized in a nitrogen atmosphere at 900°C for 1 hour. The obtained product was crushed for 30 seconds with a Wonder Blender (WB-1, imported, distributor: Osaka Chemical Co., Ltd.), sieved through a 45 μm sieve, coarse particles were removed, and a carbide was obtained. The various physical property values of the obtained carbide were as follows. BET specific surface area = 544 m$^2$/g, $V_{0.99}$ = 0.25 cm$^3$/g, $D_{V10}$ = 12 μm, $D_{V50}$ = 20 μm, $D_{V90}$ = 33 μm.

[Activation]

10 g of the obtained carbide was loaded into a tubular furnace, activated using carbon dioxide as the activation gas at 950°C for 2.9 hours, and cooled to room temperature to obtain a porous carbon. The various physical property values of the obtained porous carbon were as follows. BET specific surface area = 2,132 m$^2$/g, $V_{0.99}$ = 0.96 cm$^3$/g, $V_{0.01}/V_{0.99}$ = 0.63, $D_{V10}$ = 12 μm, $D_{V50}$ = 21 μm, $D_{V90}$ = 34 μm.

[Step (A)]

The porous carbon as listed in Table 1 was loaded into a tubular furnace, and such was implemented under the conditions listed in Table 2.

When the concentration of silicon-containing gas was not 100%, argon was introduced together with a silicon-containing gas.

The "Silicon-Containing Gas Concentration" in Table 2 refers to the volume ratio of silicon-containing gas to the total 100 volume% of silicon-containing gas and argon. The "Silicon-Containing Gas Flow Rate" refers to the total flow rate of silicon-containing gas and argon. The "Amount of Silane Introduced" refers to the volume of silicon-containing gas calculated by the product of the silicon-containing gas concentration, the silicon-containing gas flow rate, and the silicon-containing gas introduction time. "SL" represents 1/1,000th of the volume of gas calculated by multiplying the gas flow rate (sccm) by the gas introduction time (minutes), and is expressed in units of volume (standard liter). The "Volume of Silicon per Unit Mass of Porous Carbon" refers to the quantity of silicon atoms contained in the amount of silane introduced, and to a volume of silicon having the same substance, per unit mass of porous carbon. Note that the density of silicon was set at

2.33 g/cm$^3$. Moreover, the molar volume of silane under standard conditions was set at 22.4133 L.

[Step (B)]

Carried out following step (A). After cooling the temperature to 350°C, the tubular furnace was evacuated, and ethylene was introduced. The pressure inside the tubular furnace was maintained at 106 kPa, and the reaction was carried out for one hour without gas flow.

[Step (C)]

It was carried out following step (B). After cooling the temperature to 70°C, the tubular furnace was evacuated, and 5% oxygen/Ar was introduced at 1,000 sccm. After 30 minutes, 10% oxygen/Ar was introduced at 1,000 sccm after evacuating the tubular furnace. After 30 minutes, the gas was stopped, cooled to room temperature, and the composite particles were obtained.

[Example 2]

The dry resin was changed to commercially available spherical phenolic resin ($D_{V50}$ = 10 $\mu$m), and activation was carried out at 950°C for 6 hours, similar to Example 1.

[Example 3]

The dry resin was changed to commercially available spherical phenolic resin ($D_{V50}$ = 4 $\mu$m), and activation was carried out at 900°C for 2.3 hours, similar to Example 1.

[Example 4]

The dry resin was changed to commercially available spherical phenolic resin ($D_{V50}$ = 4 $\mu$m), and activation was carried out at 950°C for 4 hours, similar to Example 1.

[Example 5]

The dry resin was changed to commercially available spherical phenolic resin ($D_{V50}$ = 6 $\mu$m), and activation was carried out at 1,000°C for 5.5 hours, using 1,3-butadiene instead of ethylene as the gas including a hydrocarbon having an unsaturated bond in step (B), similar to Example 1.

[Comparative Example 1]

The dry resin was changed to commercially available spherical phenolic resin ($D_{V50}$ = 5.5 $\mu$m), and activation was carried out at 900°C for 3 hours, similar to Example 1.

[Comparative Example 2]

The dry resin was changed to commercially available spherical phenolic resin ($D_{V50}$ = 7 $\mu$m), and activation was carried out at 950°C for 5 hours, similar to Example 1.

[Comparative Example 3]

The dry resin was changed to commercially available spherical phenolic resin ($D_{V50}$ = 17 $\mu$m), and activation was carried out at 950°C for 4.5 hours, similar to Example 1.

[Table 1]

Table 1

| | Porous Carbon | | | |
|---|---|---|---|---|
| | $V_{0.99}$ (cm$^3$/g) | $V_{0.01}$ (cm$^3$/g) | $V_{0.01}$/$V_{0.99}$ | He True Density (cm$^3$/g) |
| Example 1 | 0.96 | 0.61 | 0.63 | 2.23 |
| Example 2 | 1.22 | 0.66 | 0.54 | 2.25 |
| Example 3 | 0.87 | 0.57 | 0.66 | 2.21 |
| Example 4 | 1.03 | 0.60 | 0.58 | 2.25 |
| Example 5 | 0.97 | 0.55 | 0.57 | 2.11 |
| Comparative Example 1 | 0.74 | 0.54 | 0.74 | 2.19 |
| Comparative Example 2 | 1.03 | 0.61 | 0.59 | 2.25 |
| Comparative Example 3 | 0.69 | 0.52 | 0.75 | 2.19 |

[Table 2]

Table 2

| | Porous Carbon Synthesis Charge Weight (g) | Porous Carbon Post-Synthesis Obtained Amount (g) | Step (A) | | | | | | | | Step (B) | | Step (C) | | |
|---|---|---|---|---|---|---|---|---|---|---|---|---|---|---|---|
| | | | Temperature (°C) | Silicon-Containing Gas Type | Silicon-Containing-Gas Concentration | Silicon-Containing-Gas Flow Rate (sccm) | Silicon-Containing-Gas Introduction Time (minutes) | Amount of Silane Introduced (SL) | Volume of Silicon per Unit Mass of Porous Carbon (cm$^3$/g) | Volume of Silicon /$V_{0.99}$ | Temperature (°C) | Gas Containing Hydrocarbons with Unsaturated Bonds | Temperature (°C) | 5% Oxygen/Ar Treatment Time (Minutes) | 10% Oxygen/Ar Treatment Time (Minutes) |
| Example 1 | 3.8 | 8.3 | 400 | Silane | 46% | 130 | 133 | 8.0 | 1.1 | **1.17** | 350 | Ethylene | 70 | 30 | 30 |
| Example 2 | 17.0 | 45.1 | 400 | Silane | 100% | 130 | 217 | 28.2 | 0.9 | 0.73 | 350 | Ethylene | 70 | 30 | 30 |
| Example 3 | 9.5 | 18.9 | 400 | Silane | 100% | 130 | 117 | 15.2 | 0.9 | 0.98 | 350 | Ethylene | 70 | 30 | 30 |
| Example 4 | 4.1 | 9.6 | 400 | Silane | 46% | 130 | 147 | 8.8 | 1.2 | 1.12 | 350 | Ethylene | 70 | 30 | 30 |
| Example 5 | 17.0 | 39.1 | 400 | Silane | 100% | 130 | 173 | 22.5 | 0.7 | 0.73 | 350 | 1,3-butadiene | 70 | 30 | 30 |
| Comparative Example 1 | 5.2 | 9.7 | 400 | Silane | 100% | 100 | 114 | 11.1 | 1.2 | 1.59 | 350 | Ethylene | 70 | 30 | 30 |
| Comparattive Example 2 | 3.1 | 7.1 | 400 | Silane | 17% | 230 | 240 | 9.6 | 1.7 | 1.61 | 350 | Ethvlene | 70 | 30 | 30 |
| Comparative Example 3 | 3.6 | 6.0 | 400 | Silane | 17% | 230 | 180 | 7.2 | 1.1 | 1.55 | 350 | Ethylene | 70 | 30 | 30 |

[Table 3]

[Table 3]

Table 3

| | Composite Particles | | | | | | | | | | |
|---|---|---|---|---|---|---|---|---|---|---|---|
| | Si Content (mass%) | Oxygen Content (mass%) | He True Density (g/cm$^3$) | BA True Density (g/cm$^3$) | $I_{Si}/I_G$ | $I_D/I_G$ | $D_{V10}$ ($\mu$m) | $D_{V50}$ ($\mu$m) | $D_{V90}$ ($\mu$m) | BET Specific Surface (m$^2$/g) | Powder Resistivity ($\Omega\cdot$m) |
| Example 1 | 54 | 0.5 | 1.90 | 1.68 | 0.27 | 1.15 | 13.6 | 22.5 | 35.6 | 0.5 | $5.0 \times 10^3$ |
| Example 2 | 62 | 0.3 | 1.85 | 1.64 | 0.41 | 1.15 | 4.2 | 9.6 | 19.2 | 0.9 | $1.0\times10^4$ |
| Example 3 | 49 | 0.9 | 1.87 | 1.64 | 0.31 | 1.09 | 2.3 | 5.4 | 8.7 | 1.2 | $1.0\times10^4$ |
| Example 4 | 57 | 0.5 | 1.92 | 1.65 | 0.31 | 1.15 | 2.3 | 3.8 | 6.3 | 1.6 | $5.0\times10^3$ |
| Example 5 | 56 | 0.7 | 1.95 | 1.65 | 0.32 | 1.22 | 3.2 | 6.0 | 8.6 | 2.5 | $2.0\times10^3$ |
| Comparative Example 1 | 46 | 0.7 | 1.82 | 1.53 | 0.43 | 1.10 | 2.3 | 5.3 | 8.8 | 1.1 | $1.0\times10^5$ |
| Comparative Example 2 | 56 | 0.5 | 1.83 | - | 0.62 | 1.05 | 2.9 | 6.5 | 12.5 | 1.1 | $1.0\times10^5$ |
| Comparative Example 3 | 40 | 0.5 | 1.65 | - | 0.35 | 1.05 | 11.4 | 16.4 | 23.7 | 0.4 | $2.0 \times 10^5$ |

The composite particles produced in Examples 1 to 5 have a greater He true density than the composite particles produced in Comparative Examples 1 to 3, and the amount of silicon deposited on the surface of the composite particles is smaller. Therefore, the powder including only the composite particles of the examples has a powder electrical resistivity that is lower by approximately 1 to 2 orders of magnitude compared to the powder including only the composite particles of the comparative examples.

## Industrial Applicability

The composite particles of the present invention can be suitably used as negative electrode active materials constituting the negative electrode composite layer of lithium-ion rechargeable batteries, for example. The lithium-ion rechargeable battery of the present invention can be suitably used as a power source for electronic devices such as smartphones, mobile phone terminals, and tablet PCs, as well as for power sources of electric motors such as those for vacuum cleaners, power tools, electric bicycles, drones, and electric vehicles, and for storing electricity obtained from fuel cells, solar power generation, and wind power generation.

## Claims

1. A composite particle including a carbon material and silicon, wherein

   a He true density by dry density measurement using helium gas is 1.85 $g/cm^3$ or more and 2.10 $g/cm^3$ or less,
   a silicon content is 30 mass% or more and 80 mass% or less, an oxygen content is 4.0 mass% or less,
   and a BET specific surface area is 0.5 $m^2/g$ or more and 30.0 $m^2/g$ or less.

2. The composite particle according to claim 1, wherein the BET specific surface area is 1.5 $m^2/g$ or more and 30.0 $m^2/g$ or less.

3. The composite particle according to claim 1, wherein the oxygen content is 0.7 mass% or less.

4. The composite particle according to claim 1, wherein a peak exists in the Raman spectrum between 450 $cm^{-1}$ and 495 $cm^{-1}$.

5. The composite particles according to claim 4, wherein, in a Raman spectrum, when an intensity of the peak is denoted $I_{Si}$ and an intensity of a G band (peak intensity close to 1,580 $cm^{-1}$) is denoted $I_G$, $I_{Si}/I_G$ is 0.54 or less.

6. The composite particle according to claim 1, wherein a BA true density, which is a true density by wet density measurement using 1-butanol, is 1.55 $g/cm^3$ or more and 1.90 $g/cm^3$ or less, and the He true density is greater than the BA true density.

7. The composite particle according to claim 1, wherein the intensity of the D band (peak intensity close to 1,350 $cm^{-1}$) is denoted $I_D$, and $I_D/I_G$ is between 0.2 and 1.4.

8. The composite particle according to claim 1, wherein the carbon material is porous carbon, and silicon is present in the pores of the porous carbon.

9. The composite particle according to claim 1, wherein (peak intensity of SiC (111) surface)/(peak intensity of Si (111) surface) is 0.01 or less in an XRD pattern by powder XRD using Cu-K$\alpha$ radiation.

10. The composite particle according to claim 1, wherein the 50% particle diameter $D_{V50}$ in the volume-based cumulative particle size distribution is between 1.0 $\mu m$ and 40.0 $\mu m$, and the 90% diameter $D_{V90}$ is 50.0 $\mu m$ or less.

11. The composite particle according to claim 1, wherein the atomic ratios of Si, O, and C obtained from the narrow spectra of X-ray photoelectron spectroscopy are denoted $A_{Si}$, $A_O$, and $A_C$, respectively, and the ratios of Si type from Si 2p spectrum analysis, $SiO_2$ and SiO are denoted $B_{SiO2}$ and $B_{SiO}$, respectively, $A_{Si}$ is 0.05 or more, and $A_C/(A_C + A_{Si} \times (B_{SiO2} + B_{SiO}))$ is 0.55 or more.

12. A method for producing composite particles, having a step (A) for bringing a gas including a silicon-including-gas at an amount satisfying the following condition (2) into contact with a porous carbon satisfying the following condition (1) at 300°C or more and 500°C or less to precipitate silicon in the pores and on the surface of the porous carbon.

Condition (1): In a nitrogen gas adsorption test, a pore volume when a relative pressure $P/P_0$ is 0.01 is denoted $V_{0.01}$, and a pore volume when the relative pressure $P/P_0$ is 0.99 is denoted $V_{0.99}$, where $V_{0.99}$ is between 0.4 $cm^3/g$ and 1.5 $cm^3/g$, $V_{0.01}/V_{0.99}$ is between 0.4 and 0.66, and a true density by dry density measurement using helium gas is between 1.90 $g/cm^3$ and 2.30 $g/cm^3$.
Condition (2): The volume of silicon when all silicon-including gas is converted to silicon is 1.4 times the $V_{0.99}$ of the porous carbon, or less.

13. The method for producing composite particles according to claim 12, further comprising a step (B) for bringing a gas including a hydrocarbon having an unsaturated bond into contact with the particles obtained in the step (A) at 500°C or lower.

14. The method for producing composite particles according to claim 12, comprising a step (C) of oxidizing the particles obtained in the step (A).

15. The method for producing composite particles according to claim 13, comprising a step (C) of oxidizing the particles obtained in the step (B).

16. The method for producing composite particles according to claim 12, wherein the composite particle according to claim 1 is produced.

17. A negative electrode active material including the composite particle according to claim 1.

18. A negative electrode composite layer including the negative electrode active material according to claim 17.

19. A lithium-ion rechargeable battery including the negative electrode composite layer according to claim 18.

## INTERNATIONAL SEARCH REPORT

| International application No. |
|---|
| **PCT/JP2023/042241** |

### A. CLASSIFICATION OF SUBJECT MATTER

*H01M 4/38*(2006.01)i; *C01B 32/05*(2017.01)i; *C01B 33/029*(2006.01)i; *H01M 4/36*(2006.01)i
FI:   H01M4/38 Z; C01B33/029; C01B32/05; H01M4/36 A

According to International Patent Classification (IPC) or to both national classification and IPC

### B. FIELDS SEARCHED

Minimum documentation searched (classification system followed by classification symbols)

H01M4/38; C01B32/05; C01B33/029; H01M4/36

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2021/241754 A1 (SHOWA DENKO K.K.) 02 December 2021 (2021-12-02) claims 1-6, 9-11, paragraphs [0021]-[0025], [0027]-[0033], [0056]-[0061], examples 1-7, fig. 2 | 1-5, 7-10, 17-19 |
| A | | 6, 11-16 |
| X | WO 2021/241751 A1 (SHOWA DENKO K.K.) 02 December 2021 (2021-12-02) claims 1-9, 15-17, paragraphs [0015], [0027]-[0028], [0038], [0085], [0137], examples 1-5, 9, 11-13, tables 1, 4 | 1-5, 7-10, 17-19 |
| A | | 6, 11-16 |
| A | JP 2019-125435 A (KUREHA CORP.) 25 July 2019 (2019-07-25) | 1-19 |
| A | JP 2018-534720 A (ENERG2 TECHNOLOGIES, INC.) 22 November 2018 (2018-11-22) | 1-19 |
| A | JP 2020-514231 A (GROUP 14 TECHNOLOGIES, INC) 21 May 2020 (2020-05-21) | 1-19 |

☐ Further documents are listed in the continuation of Box C.      ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **29 January 2024** | **13 February 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

## INTERNATIONAL SEARCH REPORT
### Information on patent family members

International application No.

**PCT/JP2023/042241**

| Patent document cited in search report | Publication date (day/month/year) | Patent family member(s) | Publication date (day/month/year) |
|---|---|---|---|
| WO 2021/241754 A1 | 02 December 2021 | US 2023/0223537 A1 claims 1-6, 9-11, paragraphs [0037]-[0042], [0044]-[0051], [0077]-[0088], examples 1-7, fig. 2<br>EP 4160726 A1<br>CN 115668545 A | |
| WO 2021/241751 A1 | 02 December 2021 | US 2023/0234852 A1 claims 1-9, 15-18, paragraphs [0046], [0058]-[0059], [0071], [0137], [0251], examples 1-5, 9, 11-13, tables 1, 4<br>EP 4159675 A1<br>CN 115699360 A<br>KR 10-2023-0017260 A | |
| JP 2019-125435 A | 25 July 2019 | US 2019/0221835 A1<br>CN 110034285 A | |
| JP 2018-534720 A | 22 November 2018 | US 2017/0170477 A1<br>US 2019/0280298 A1<br>US 2020/0075954 A1<br>US 2020/0365896 A1<br>US 2020/0152983 A1<br>US 2022/0231296 A1<br>US 2022/0352517 A1<br>US 2023/0058348 A1<br>WO 2017/040299 A1<br>EP 3341990 A1<br>EP 3836261 A1<br>CN 108475779 A<br>KR 10-2018-0113187 A<br>CN 113224274 A<br>KR 10-2023-0091915 A<br>KR 10-2023-0092015 A | |
| JP 2020-514231 A | 21 May 2020 | US 2020/0020935 A1<br>WO 2018/165610 A1<br>KR 10-2019-0122805 A<br>CN 110582823 A | |

Form PCT/ISA/210 (patent family annex) (July 2022)

**EP 4 645 466 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018534720 A